(19) Europäisches Patentamt
European Patent Office
Office européen des brevets

(11) EP 3 186 936 B1

(12) EUROPEAN PATENT SPECIFICATION

(45) Date of publication and mention
of the grant of the patent:
10.07.2019 Bulletin 2019/28

(51) Int Cl.:
*H04L 25/03* (2006.01)   *H04L 1/06* (2006.01)

(21) Application number: 15790227.1

(22) Date of filing: 30.10.2015

(86) International application number:
PCT/GB2015/053267

(87) International publication number:
WO 2016/071673 (12.05.2016 Gazette 2016/19)

(54) **ITERATIVE MIMO SIGNAL DETECTION**

ERKENNUNG VON ITERATIVEN MIMO-SIGNALEN

DÉTECTION DE SIGNAUX MIMO ITÉRATIVE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 03.11.2014 GB 201419584
03.11.2014 GB 201419599

(43) Date of publication of application:
05.07.2017 Bulletin 2017/27

(73) Proprietor: The University of Surrey
Guildford
Surrey GU2 7XH (GB)

(72) Inventors:
• MA, Yi
Guildford, Surrey GU2 7XH (GB)
• YI, Na
Guildford, Surrey GU2 7XH (GB)
• TAFAZOLLI, Rahim
Guildford, Surrey GU2 7XH (GB)

(74) Representative: Hewett, Jonathan Michael
Richard et al
Venner Shipley LLP
200 Aldersgate
London EC1A 4HD (GB)

(56) References cited:
WO-A1-2009/078766

• WENJIE JIANG ET AL: "PHY 06-3 - Approximate
Maximum Likelihood Detectors for MIMO Spatial
Multiplexing Systems", WIRELESS
COMMUNICATIONS AND NETWORKING
CONFERENCE, 2008. WCNC 2008. IEEE, IEEE,
PISCATAWAY, NJ, USA, 31 March 2008
(2008-03-31), pages 153-158, XP031243617, ISBN:
978-1-4244-1997-5

## Description

### Technical Field

The present invention relates to signal detection, and particularly, but not exclusively, to detection of baseband signals involving a massive number of superimposed components.

### Background Art

Next-generation wireless communication systems are targeting data rates as high as terabits per second. This requires wireless transceivers to support large-scale antenna systems (e.g. 64x64 multiple input and multiple output (MIMO) or even 1024x1024 MIMO, an example of "massive" MIMO), higher-order modulations (e.g. 64 quadrature amplitude modulation (QAM) and 256QAM), as well as ultra-broad band communications. In addition to hardware limitations, current transceivers face great challenges of signal-processing scalability and optimality to the size of MIMO networks. An example of such a challenge is the problem of baseband signal detection involving a massive number of superimposed signal components, which has been a big problem for almost half a century in the multi-disciplinary areas of signal processing, communications and mathematics.

Mathematically, the signal detection problem can in general terms be described in the form of an integer least-square problem in the presence of additive noise. In theory, such a problem can be solved by means of maximum-likelihood (ML) search over a set of finite alphabets, which yields the optimum solution, as described by D. Gesbert et al, in "Multi-cell MIMO cooperative networks: a new look at interference,"IEEE Journal of Selected Areas in Communications, pp. 1380-1408, vol. 28, December 2010.

However, the size of the finite-alphabet set increases exponentially with the number of superimposed signal components as well as the modulation size. The use of Euclidean distances in the signal estimation process involves the square of the distance between two points, and the square root of the sum of the squares of distances between pairs of points (i.e. each distance is "weighted" by itself in the summation), and such terms significantly add to the computational intensity of the methods used.

Due to such poor scalability, ML is not practically implementable for cases involving large number of signal components (e.g. > 4) and high-order modulations.

In the area of computer science, the computational complexity of ML can be reduced by means of a tree search, also known as sphere decoding (SD). However, SD does not solve the scalability problem inherent in ML. To this date, the best scalable approaches are linear detectors mainly referring to zero forcing (ZF) and minimum mean-square error (MMSE). However, linear detectors are too sub-optimum in the cases involving large number of signal components, and their performances can be more than 30dB away from the capacity limit, as set out by F. Rusek et al in "Scaling up MIMO: opportunities and challenges with very large arrays," IEEE Signal Processing Magazine, pp. 40-60, Jan. 2013.

In the last two decades, substantial research efforts have been made in the areas of signal processing to find good trade-off between performance and scalability. Various advanced detection approaches have been developed, which include successive/parallel interference cancellation, lattice reduction, likelihood ascent searches (LAS) such as Tabu searches, semi-definite reduction, and various versions of sphere detection. However, none of them can offer satisfactory detection performances and acceptable scalability at the same time.

International Patent Application WO 2009/078766 discloses a system for MIMO detection, for detecting multiple parallel symbol streams, performing first a QR decomposition and an associated equalisation, then an interference cancellation process. Then a module selects either the equalised signal or the interference cancelled signalled. Errors are detected in the selected signals and error free symbol streams are withdrawn from the received signal and an iterative symbol detection and selection is performed.

### Summary of Invention

According to an aspect of the present invention, there is provided a receiver for detecting a signal according to claim 1.

According to another aspect of the present invention, there is provided a communications system according to claim 9.

According to another aspect of the present invention, there is provided a method of detecting a signal according to claim 11.

According to another aspect of the present invention, there is provided a computer program according to claim 14.

Optional features are set out in the dependent claims.

Embodiments of the present invention can offer near-optimum detection performance and excellent computational scalability for networks involving large number of antennas/data streams per channel. Therefore, it has great potential to gain wide applications in the area of wireless systems.

The present invention can support any part of the radio spectrum including visible-light MIMO systems, and including point-to-point, co-located and distributed MIMO systems. The present invention can support massive MIMO access point (with, for example, 64, 128, 256, 512 or 1024 or higher receive antennas), enabling super-fast and energy efficient communications of several hundreds of gigabits/s or terabits per second depending on number of antennas, modulation level and bandwidth.

In networked MIMO systems, the receiver of the present invention can be considered as a "super receiver" which efficiently utilizes interference and performs near-optimum joint multi-user detection with low latency and linear scalability. The strong interference-utilization capability of the present invention allows wireless transmitters which communicate with the receiver to be very simple with minimum protocol stack as specified in the OSI model.

The present invention provides the unique feature of conducting scalable near-optimum sequence detection, with which current and future wireless systems can take full advantage of channel diversity. For instance, the present invention enables low-complexity time-domain signal detection for orthogonal frequency division multiplexing (OFDM) systems, by means of which the detection performance is much better than conventional frequency-domain detection.

Receiver complexity is reduced by the present invention for almost all of advanced waveforms/modulation schemes including multi-carrier and single carrier schemes, and Wave Modulation (WAM™) whilst maintaining near-optimum detection performances.

In LTE-A, the present invention can be employed to significantly improve link throughput due to enhanced MIMO detection capability.

Receivers according to the present invention can be also employed in CDMA systems for low-complexity and high performance multi-user detection.

## Brief Description of Drawings

Embodiments of the present invention will be described below, by way of example only, with reference to the accompanying drawings in which:

Figure 1 illustrates an example of massive array processing;
Figure 2 illustrates a general model of the massive array processing problem;
Figure 3 illustrates a receiver according to an embodiment of the present invention;
Figure 4 illustrates the top-level block diagram of a massive array processing component, according to an embodiment of the present invention;
Figure 5 illustrates the initialization module of Figure 4;
Figure 6 illustrates the error correction module of Figure 4;
Figure 7 illustrates the block diagram of error detection module of Figure 4;
Figure 8 illustrates a comparison of the bit error rate of signal detection of an embodiment of the present invention and those of conventional systems, in the case of a QPSK transmission scheme; and
Figure 9 illustrates the performance comparison for different modulation schemes used in transmission, according to embodiments of the present invention.

## Description of Preferred Embodiments

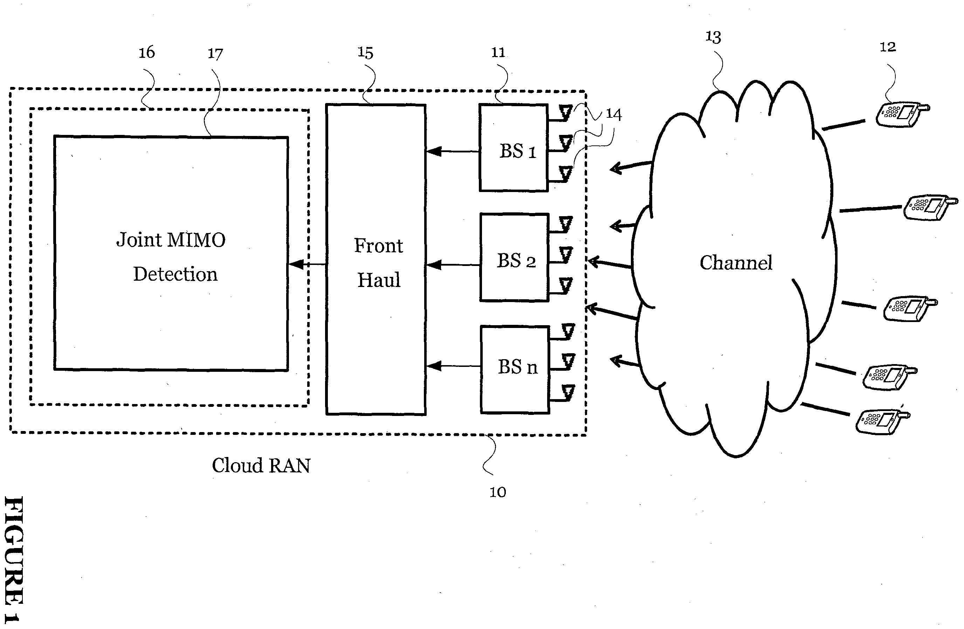

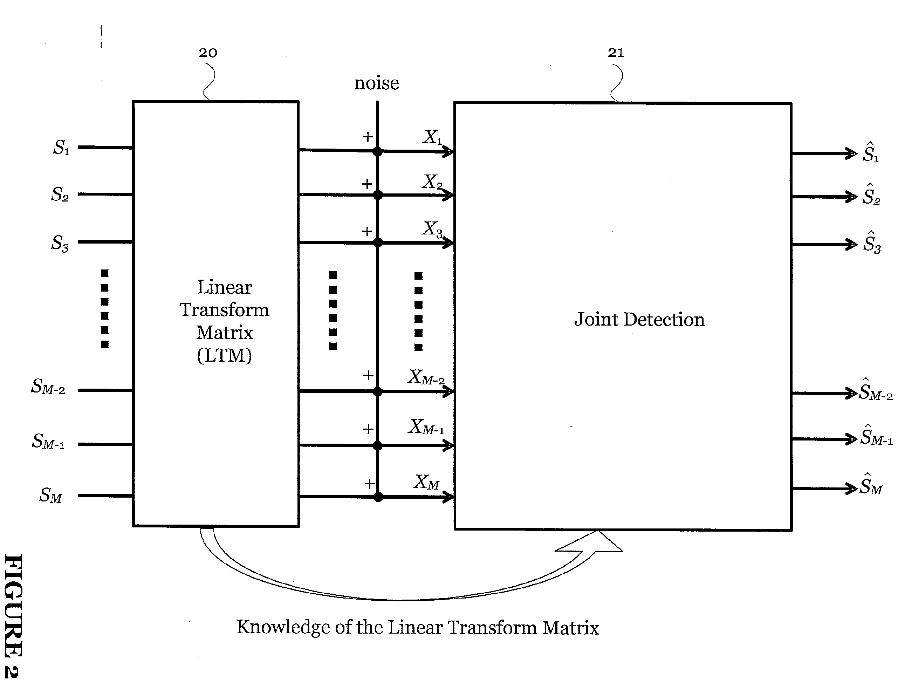

Figure 1 illustrates an example of massive array processing in the area of mobile communications. The example shown is a MIMO system and relates to a cloud-based radio access network (RAN) uplink architecture 10 involving $n$ access points (AP) 11, (also referred to as remote radio heads or base stations (BS)), and a massive number (such as >32) of user equipment (UE) devices 12, such as mobile terminals, which communicate with the access points over a communications channel 13. Each BS has multiple antennas 14 for receiving uplink signals, and the received waveforms are sent to the cloud 16 via the front-haul 15. In the cloud, joint MIMO detection is employed by a joint detection component 17 to recover the signals of the UEs 12. The joint MIMO detection component 17 will be described in more detail with respect to the generalisation shown in Figure 2, and can be understood as a receiver which performs detection of the signals received from the fronthaul 15.

This example falls into a general model of massive array processing problem, which is illustrated in Figure 2. A group of parallel data streams or waveforms ($S_1$, $S_2$, ..., $S_M$), represented as vector $\underline{S}$, are first fed into a linear transforming component 20, which is an $M$-by-$M$ matrix. The linear transform matrix (LTM) can be either deterministic or random.

In mobile communications, for example, the linear transform matrix can represent the configuration of MIMO channels, user signatures in CDMA systems, the inverse or discrete Fast Fourier Transform (IFFT/IDFT) matrix in OFDM systems, linear precoding/beamforming operations, the effect of a pulse shaping filter, as well as many other linear physical distortions in mobile channels. The matrix thus contains information representing or modelling one or more of a number of properties associated with the configuration of the transmission scheme or protocol which is used for the signal.

The output of the linear transforming component is added with thermal noise, which produces a noisy signal $\underline{X}$ containing components $(X_1, X_2, ..., X_M)$, and this is then fed into a processing module referred to in Figure 2 as a signal detection component 21. The signal detection component is a module or component which is capable of performing joint or parallel detection of a plurality of components, such as data streams, of the initial signal, and operates as a generalisation of the joint MIMO detection component 17 shown in Figure 1. Put another way, assuming the *M*-by-*M* linear transform matrix is known, the signal detection component 21 aims to reproduce $(S_1, S_2, ..., S_M)$ based on the noisy observation of $(X_1, X_2, ..., X_M)$. In practice, the output of the signal detection component 21 is an estimate of $(S_1, S_2, ..., S_M)$, which is represented as $\underline{\hat{S}}$ $(\hat{S}_1, \hat{S}_2,...,\hat{S}_M)$.

The present invention can be understood as residing within the signal detection component 21 of Figure 2. In the system shown in Figure 1, for example, the invention resides in the joint MIMO detection module 17.

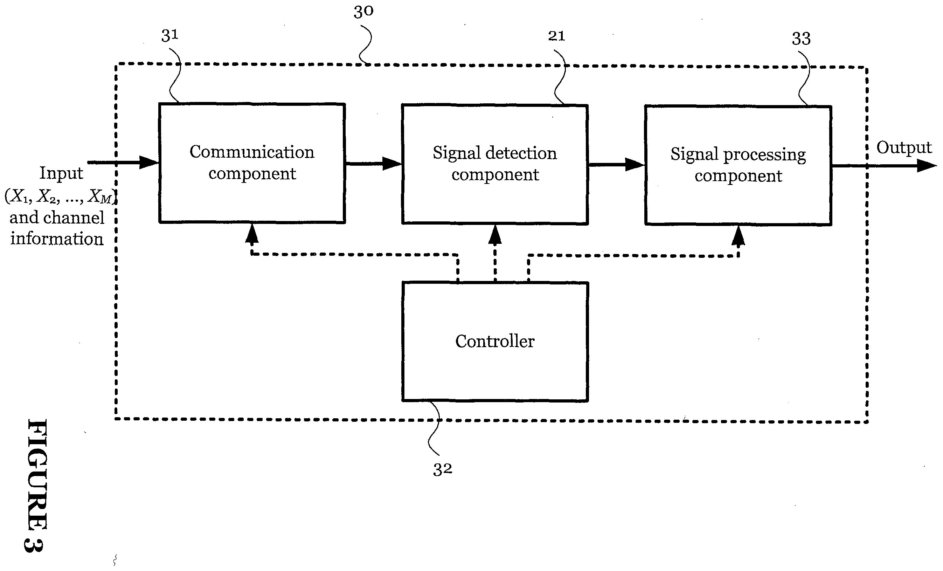

Figure 3 illustrates a signal receiver 30 according to embodiments of the present invention. The receiver includes a signal detection component 21, a communication component 31 or "input module" which may transmit as well as receive signals, and a controller 32. The communication component 31 may include antennas of a MIMO array, or include an antenna which receive signals already received via MIMO array at a number of base stations as shown in Figure 2. In this regard, the communication component 31 is configured such that it can support point-to-point, co-located and distributed MIMO systems. The MIMO array may be symmetric, having the same number of inputs as outputs, or may be asymmetric, having different numbers of inputs and outputs.

The signal receiver 30 can form a separate component of, or be integral with a signal processing device which performs processing on a received signal for one or more specific applications. In the embodiment of Figure 3, a signal processing component 33 is illustrated as part of the signal receiver 30. In this regard, the controller 32 of the receiver may be a dedicated receiver controller, or may form part of the device with which the receiver is associated, the controller 32 also controlling signal processing circuitry in the device. As such, although a controller is shown in Figure 3 which controls each of the communication component 31, the signal detection component 21 and the signal processing component, the control illustrated via dotted lines, it is not essential that the controller is included in the receiver 30.

The input to the receiver includes a noisy observation $(X_1, X_2, ..., X_M)$ of a signal transmitted from a transmission source, where each component *X* represents a portion of the signal such as a data stream. The received signal may be a baseband signal and may be analogue or digital. In addition, the receiver receives a specification of the transmission scheme used to transmit the signal, in the form of an LTM as described in relation to Figure 2.

The receiver may contain additional components (not shown) such as a power supply for powering its components.

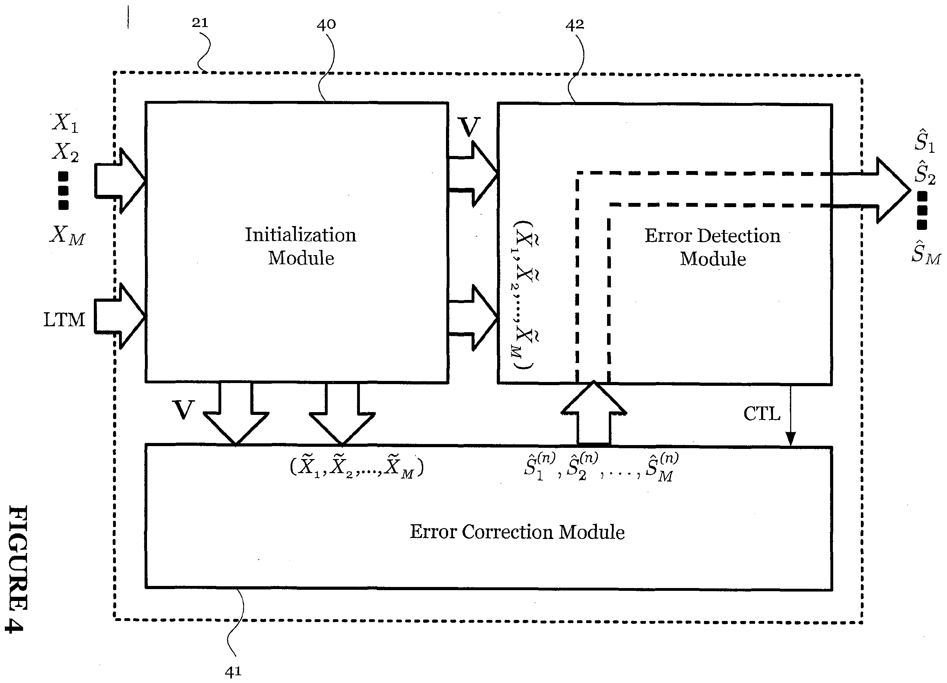

Figure 4 represents an overview of a signal detection component 21 according to an embodiment of the present invention. The signal detection component 21 comprises three functional modules or sub-components - an initialization module 40, an error correction module 41, and an error detection module 42. Each module can be implemented as a separate hardware component, or can be integrated with one or more other components of the joint detection module. Alternatively, each module can be implemented in software, or as a combination of hardware and software. The terms component and module shall be used interchangeably hereinafter.

The input to the initialization module 40 includes a noisy observation $(X_1, X_2, ..., X_M)$ of a signal, and an LTM. The output of the initialization module is a processed version of $(X_1, X_2, ..., X_M)$, referred to as $(\tilde{X}_1, \tilde{X}_2,..., \tilde{X}_M)$, and a component of the LTM, V, to be described in more detail below. These outputs are fed to both of the error correction 41 and error detection 42 modules for signal estimation. The error correction module 41 determines an estimate of the components of the source signal, and these are forwarded to the error detection module 42 which determines whether there are one or more errors in the estimation. If there is no error, the estimate is output as a representation of the signal which is detected by the receiver 30. If there are one or more errors, the error is corrected by the error correction module 41.

In an embodiment of the invention, the error correction process may be iterative, so that multiple error correction steps may be performed. The number of error correction steps may be defined by the user, or may be unlimited, the length of the iteration determined by the error determined by the error detection module, as described in more detail below. When considered iteratively, the error correction module 41 determines an initial decision of components of the signal $(\hat{S}_1^0, \hat{S}_2^0,...,\hat{S}_M^0)$ based on the signals input to the error correction module 41, and then generates a first decision of components $(\hat{S}_1^1, \hat{S}_2^1,...,\hat{S}_M^1)$ which most closely match the input from the initialization module 40 when the LTM is applied to the estimated signals. In this regard, the error correction module 41 corrects an error in the input estimation $(\hat{S}_1^0, \hat{S}_2^0,...,\hat{S}_M^0)$. The error correction module 41 corrects then decision errors in iterative manner. In iteration cycle

$n$, the decision on the signal components is represented as $(\hat{S}_1^{(n)}, \hat{S}_2^{(n)}, ..., \hat{S}_M^{(n)})$, and these are the components which are fed back as inputs to the error correction module 41 in place of the initial decision. The iterative process stops when the error detection module 42 sends a control signal to that effect, illustrated via the "CTL" channel in Figure 4.

The error detection module 42 judges whether the decision made by the error correction module 41 contains errors. In the present embodiment, if there are errors detected, then the error detection module 42 sets CTL = 0, which means the error correction procedure should continue, or otherwise CTL = 1, which means the error correction procedure should stop. It will be appreciated that other control schemes which have the same effect may be employed. The error detection module 42 operates in a way such that the present invention is able to report incorrectly detected MIMO blocks without the need for error detection or correction codes.

The output of the error detection module 42 is the final decision of the signal components, and represents an estimation of the input signal $(\hat{S}_1, \hat{S}_2, ..., \hat{S}_M)$. In some cases there exist errors that are not correctable, for which the error detection module 42 sets CTL = 1 to stop the error correction procedure. Then, the output contains decision errors, and the receiver 30 can request, under the control of the controller 32, the transmitter to perform retransmission. Various types of retransmission can be applied, such as a hybrid automatic repeat request (HARQ) scheme. The retransmission request is transmitted using the communication component 21 of the receiver 30.

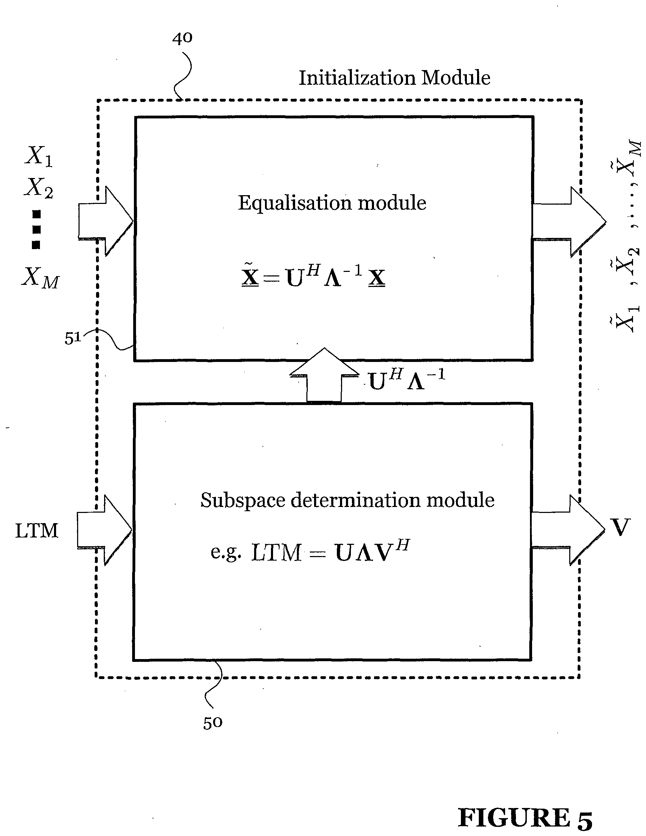

Figure 5 illustrates a block diagram showing more detail of the initialization module 40, according to an embodiment of the invention. It has two modules or sub-components. A first module is to perform matrix decomposition on the LTM, to facilitate subsequent processing, and is referred to as a subspace determination module 50. Any matrix decomposition technique can be used. Singular value decomposition is illustrated in the present embodiment as an implementation which is well supported in computer software.

According to singular value decomposition (SVD), the LTM (represented as matrix **H**) can be written as a product $\mathbf{U}\Lambda\mathbf{V}^H$, where **U** and **V** are unitary matrices, $\mathbf{V}^H$ is the Hermitian conjugate (or conjugate transpose) of **V**, and $\Lambda$ is a diagonal matrix containing the singular values of **H**. A unitary matrix is one in which the $\mathbf{VV}^H$ is equal to the identity matrix **I**. For a unitary matrix **V** of size $M$-by-$M$, **V** defines $M$ orthogonal eigenspaces or "subspaces" by means of row vectors $\vec{v_i}$ for $i$ = 1, 2,..., $M$.

The subspace determination module 50 of Figure 5 is thus able to derive two information components from the input LTM. A first component is the product $\mathbf{U}\Lambda$ and a second component is the matrix $\mathbf{V}^H$. Each component can be understood as a portion of the information describing the transmission of the input signal, as explained with reference to Figure 2.

Consider the analogy of geometric transforms, in which a transformation matrix **R** can be represented as a product of a first rotation matrix **V**, a scaling matrix $\Lambda$ and a second matrix **U**, such that $\mathbf{R} = \mathbf{U}\Lambda\mathbf{V}^H$ according to the principles of SVD. In this analogy, the individual components **U** and **V** represent portions of the overall transformation, and may thus represent sub-transformations in their own right. In a similar way, **U** and **V** in the context of the present embodiment can represent portions of the definition of the configuration of the transmission scheme and may thus have physical significance in terms of their transformation on an input signal. In one example, they may represent portions of a user signature in CMDA systems, for example.

As set out above, the matrix decomposition methods used in embodiments of the present invention are not limited to singular value decomposition. Any matrix decomposition method that can produce the unitary matrix **V** as an output, defining a series of orthogonal subspaces for signal estimation, can be adopted.

The second module of the initialization module in the present embodiment is to equalise the effect of the unitary matrix **U** and the singular values $\Lambda$, generated from the SVD, on the noisy signal $(X_1, X_2, ..., X_M)$ input to the second component. The second component shall thus be referred to as a first equalisation module 51. In communications, equalisation is a process by which the effect of distortion introduced into a signal transmitted through a communications channel can be reversed. As such, equalisation of the effect of **U** and $\Lambda$ is to be understood in terms of the signal obtained when the inverse of **U** and $\Lambda$ is applied. The aim of the equalization is to approximate an observed signal to its original form prior to transmission, and so elimination of the effect of the component of the transmission scheme represented by **U** and $\Lambda$ means that only the effect of transmission component **V** remains.

Considering again the representation of Figure 2, an observed noisy signal represented by vector $\underline{X}$ containing components $(X_1, X_2, ..., X_M)$ can be considered to be related the source signal $\underline{S}$ via the LTM matrix **H** and a noise vector $\underline{n}$ by the relationship shown in expression (1):

$$\underline{X} = \mathbf{H}\underline{S} + \underline{n} \qquad \text{Expression (1)}$$

Applying SVD to **H** gives expression (2);

$$\underline{X} = \mathbf{U}\Lambda\mathbf{V}^H\underline{S} + \underline{n} \qquad \text{Expression (2)}$$

Equalisation of the effect of **U** and $\Lambda$ through applying the inverse of product $(\mathbf{U}\Lambda)^{-1}$ provides a modified version of the observed signal $\underline{X}$ which shall be referred to as $\underline{\tilde{X}}$, which is related to $\underline{X}$ via expression (3):

$$\underline{\tilde{X}} = \mathbf{U}^{-1}\Lambda^{-1}\underline{X} \qquad \text{Expression (3)}$$

It sill be appreciated that $\mathbf{U}^{-1} = \mathbf{U}^H$ for a unitary matrix **U**. Substituting for $\underline{X}$ in expression (2) gives expression (4):

$$\underline{\tilde{X}} = \mathbf{V}^H\underline{S} + \underline{z} \qquad \text{Expression (4)}$$

where $\underline{z}$ is used to denote a mathematical distinction from vector $\underline{n}$, but in practice $\underline{z}$ represents a noise vector which is uncorrelated with the input signal in the same way as $\underline{n}$.

The term $\underline{\tilde{X}}$, which was referred to above as a "modified" version of $\underline{X}$, can be regarded as a "formatted" version of $\underline{X}$, the formatting reflecting a mathematical operation being applied to $\underline{X}$ to bring it into a form which enables signal estimation to be performed by the error correction module 41 and the error detection module 42, to be described in more detail below. The formatted signal components are represented as $(\tilde{X}_1, \tilde{X}_2,..., \tilde{X}_M)$. In practice, the formatting represents the equalisation of **U** and $\Lambda$ and the result is a signal which can be estimated based on equalisation of matrix **V**. Because **V** is the term which mathematically is most immediate to $\underline{X}$ in the SVD product, **U** and $\Lambda$ must be removed before the effect of **V** can be eliminated, which is why the output of the initialization module 50 is $\mathbf{V}^H$, together with $\underline{\tilde{X}}$. The initialization module 50 can also be considered as a formatting component or module.

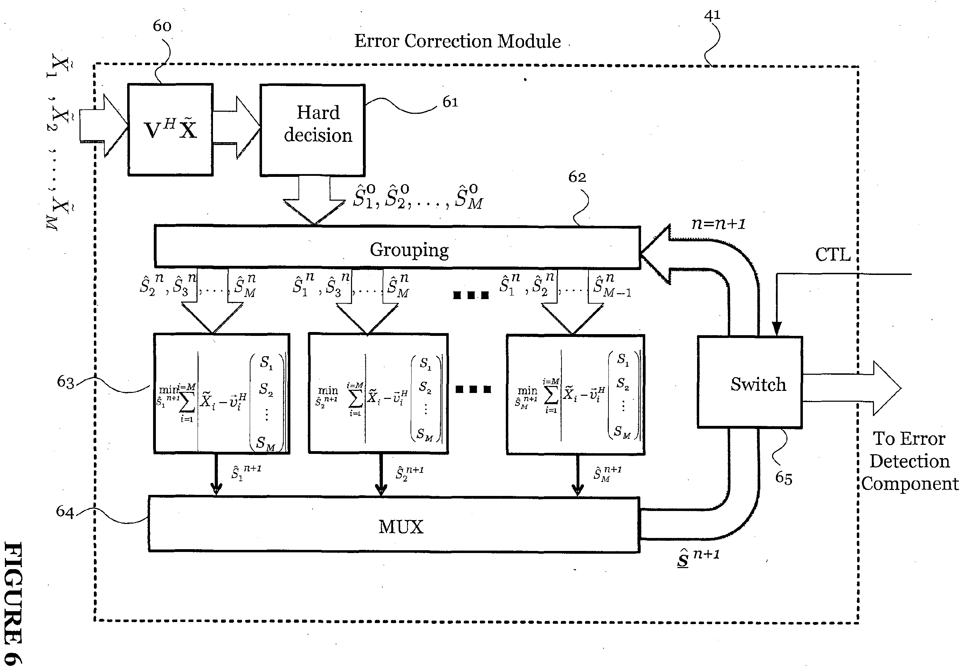

Figure 6 illustrates a block diagram of the error correction module 41 according to an embodiment of the present invention. The error correction procedure consists of several steps. The first step is to equalize the unitary matrix **V** from the input from the subspace determination module 50, and form an initial estimation decision $(\hat{S}_1^{\mathrm{o}}, \hat{S}_2^{\mathrm{o}},...,\hat{S}_M^{\mathrm{o}})$ of the components of the signal received by the receiver 30. This is performed by a second equalisation module 60. In the subsequent description, the components shall be considered as "symbols" or waveforms from a predetermined alphabet. The alphabet may represent QAM constellation points, for example, such as $1+j$, $1-j$, $-1+j$, and $-1-j$ in a simplified example of 4-QAM, where $j$ is the complex variable. Each component $(\hat{S}_1^{\mathrm{o}}, \hat{S}_2^{\mathrm{o}},...,\hat{S}_M^{\mathrm{o}})$ must be one of the constellation points in this example.

The initial estimation is relatively "crude" and represents a "hard decision" on the estimated symbol, and is performed by a hard decision module 61. Since the decision is simply an initial estimate, and is thus performed only once in contrast to the iterative decision process to be described below, a process such as calculation of the Euclidean distance between a point in a signal space which represents a symbol in the predetermined alphabet and a point in the same space representing the formatted signal components can be used without compromising scalability.

The initial estimation is used to generate a first estimated group of symbols $(\hat{S}_1^1, \hat{S}_2^1,...,\hat{S}_M^1)$, the superscript one representing the first step of an iteration. $M$ groups are then created by a grouping module 62, where $M$ represents the dimensionality of matrix **V**, each group containing $M$-1 symbols, with a different one of the symbols from $\hat{S}_1^1$ to $\hat{S}_M^1$ omitted in each group. In the subsequent processing, each of the $M$-1 symbols in the group is fixed in the calculations to be described below in accordance with the outcome of the hard decision, while the omitted symbol is adjusted within the predetermined alphabet in the estimation process in order to determine the best estimate for that symbol. In other words, the subsequent processing represents a determination of one symbol, given a fixed estimate for the other $M$-1 symbols, which leads to an optimal result. This determination is performed in parallel by $M$ estimation modules 63, one for each of the $M$ groups, so as to determine a new estimate for each of $\hat{S}_1$ to $\hat{S}_M$. In an alternative embodiment, the $M$ estimation modules may take the form of an integrated estimation module performing parallel operations. The estimates are multiplexed together by a multiplexer 64 and output to the error detection module 42 which determines whether the estimates contain any errors. If errors are present, iterative processing is performed using the new symbol estimates as a starting value for each symbol, in place of the initial hard decision estimates. The iteration is represented by setting iteration cycle value $n$ as $n+1$. The iteration control signal CTL is received from the error detection module 42.

The estimation process performed on each individual group by each estimation module 63 according to an embodiment of the present invention will now be described. In summary, this mathematical operation aims to find the best variable symbol 5 so that the equally weighted sum of Euclidean distances in each of the M sub-spaces defined by matrix **V** is minimized. The output of the estimation process is a vector representing an estimation of the source signal, which thus corresponds to the signal which is detected by the receiver of the present invention. For the first iteration, a vector $\hat{\pmb{S}}^1$ is output containing components $(\hat{S}_1^1, \hat{S}_2^1, ..., \hat{S}_M^1)$, based on an input $(\hat{S}_1^0, \hat{S}_2^0, ..., \hat{S}_M^0)$ to the grouping module. The quantity which is to be minimised is illustrated in expression (5) as below:

$$\sum_{i=1}^{i=M} \left| \widetilde{X}_i - \vec{v}_i^H \begin{pmatrix} S_1 \\ S_2 \\ \vdots \\ S_M \end{pmatrix} \right| \text{ for } i = 1, 2, ..., M \qquad \text{Expression (5)}$$

This expression is based on expression (4), in terms of determination of symbols which minimise the difference between $\widetilde{X}$ and $\mathbf{V}^H\mathbf{S}$. In each group, the minimisation is performed by testing different symbols from the predetermined alphabet as the value of the symbol $\hat{\pmb{S}}$ designated as being variable. For a group $k$, where $1 \le k \le M$, the variable symbol is $\hat{S}_k$ in an embodiment of the present invention, while $\hat{S}_1$ ... $\hat{S}_{k-1}$ and $\hat{S}_{k+1}$ ... $\hat{S}_M$ are fixed as the quantities estimated either via the initial hard decision, or in a previous iteration. In expression (5), the matrix **V** as derived from the LTM is formed of a series of $M$ orthogonal row vectors $\vec{v}_i$ for i = 1, 2,..., $M$, representing the $M$ subspaces over which the summation is performed.

A benefit of the invention is that in each minimisation operation, only one candidate symbol $\hat{S}_k$ need be selected from the alphabet in an estimation process. Whether the candidate symbol is correct or not is assessed by the error detection module 42, so that an alternative symbol from the alphabet is selected only if necessary. In conventional signal estimation systems, an exhaustive search for the entire source signal must be performed across the entire symbol alphabet in order to determine a minimum Euclidian distance between an observed signal $\pmb{X}$, and a source signal $\pmb{S}$ as multiplied by the LTM **H** (i.e. minimisation of the quantity $|\pmb{X}\text{-}\mathbf{H}\pmb{S}|^2$), since conventionally, no processing is performed by a signal estimator beyond the initial hard decision illustrated in Figure 6.

In embodiments of the present invention, the distances which are determined in the summation in expression (5) are linear, that is to say, they represent distances which are measured along the direction defined by a row vector $\vec{v}_i$. This significantly reduces the processing complexity in comparison to the processing which would be carried out using a Euclidean distance based on the square root of the sum of squared distances in orthogonal subspaces. The distance between the estimated signal and the formatted signal is resolved into dimensions defined by the matrix **V**. Put another way, this aspect of the invention can be understood mathematically in terms of the comparison between determining the Euclidean distance between two points $(x_1, y_1, z_1)$ and $(x_2, y_2, z_2)$ in a three-dimensional Cartesian space with axes $x$, $y$ and $z$, and determining a distance between two points in a one-dimensional space, i.e. a line. The Euclidean distance may be represented as $\sqrt{(x_1 - x_2)^2 + (y_1 - y_2)^2 + (z_1 - z_2)^2}$, in which each distance $(x_1 - x_2)$, $(y_1 - y_2)$ and $(z_1 - z_2)$ is weighted by itself, summed, and a square root is taken. When it is considered that such calculations must be performed within the context of an exhaustive search across the entire alphabet, the required calculations are significant. For a 64-QAM transmission system, in which the alphabet comprises 64 constellation points, the required number of processing steps is of the order of $64^M$ (where $M$ is number of superimposed components).

The distance measured using expression (5) in embodiments of the present invention is a linear distance along a straight line defined by $\vec{v}_i$ and thus no squared terms are required, and no square root must be performed. The present invention can thus be seen to have two significant benefits over a conventional signal estimator - firstly in terms of providing an error detection module 42 to assess the errors in an estimation and to reduce the number of candidate symbols to be searched by means of an iterative scheme, and secondly in terms of performing linear calculations in a particular subspace instead of calculating Euclidean distances in multiple dimensions in which a resolved distance in each dimension must be weighted by itself (i.e. squared) in the distance calculation.

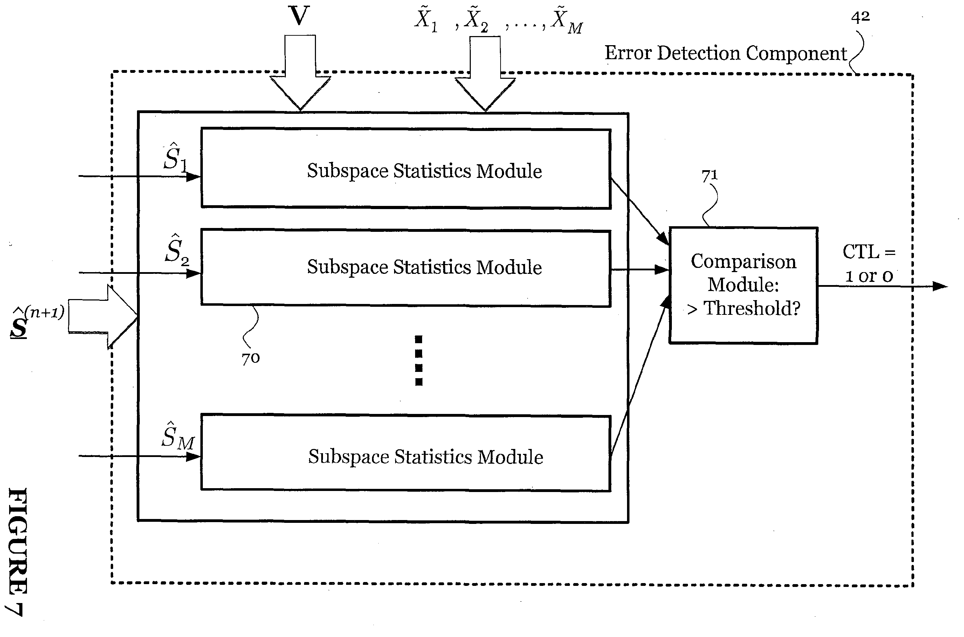

Figure 7 illustrates a block diagram of the error detection module 42 according to an embodiment of the present invention. The error detection module 42 comprises a plurality of M parallel processing components referred to as subspace statistics modules 70, which can process each individual symbol decision in a parallel manner to output statistics relating to any error or errors which are present. The subspace statistics modules 70 may be separate software/hardware implementations from each other, or may be integrated into a master processing module, or may be arranged as parallel sub-groups of processors. The error detection module 42 receives an estimation of the source signal $\hat{\underline{S}}^{n+1}$ where the superscript $n+1$ denotes an iteration step of the error correction module which follows previous iteration $n$ in which the inputs to the grouping module 62 in the error correction module 41 were decided. In addition, the formatted noisy observations $(\tilde{X}_1, \tilde{X}_2,..., \tilde{X}_M)$ are received from the initialization module 40, together with matrix **V** from the subspace determination module 50.

Given an input symbol decision $\hat{S}_k$ and the formatted noisy observations $(\tilde{X}_1, \tilde{X}_2,..., \tilde{X}_M)$ a $k^{th}$ subspace statistics module 70 calculates the Euclidean distance between $\tilde{X}_k$ and $\hat{S}_k$ in a sub-space $k$ within the space **V**, and also measures the distance between symbols other than $\hat{S}_k$, and observations other than $\tilde{X}_k$ in subspaces other than the $k^{th}$ subspace as follows.

Let $E_k$ be the Euclidean distance between the candidate symbol $\hat{S}_k$ and $\tilde{X}_k$ in the $k^{th}$ subspace, and let $D_q$ be the Euclidean distance between symbols other than $\hat{S}_k$, (i.e. those symbols which are not candidate symbols and which are determined in a prior estimation step) and respective formatted noisy observations other than $\tilde{X}_k$ in a $q^{th}$ subspace where $q = 1, 2...k-1, k+1,...M$, i.e. $k \neq q$. For the case of $E_k > D_q$, a distance comparison parameter $r_q$ is labelled as 1. For the case of $E_k < D_q$, the distance comparison parameter $r_q$ is labelled as 0. An array $A$ of $M$-1 binary values for parameter $r_q$ is output by the subspace statistics module 70. By way of explanation, $r_1$ corresponds to the comparison between $E_k$ and $D_1$. Similarly, $r_2$ corresponds to the comparison between $E_k$ and $D_2$, and so on. Each subspace statistics module 70 sums all of the components $r_q$ to give a respective integer output $r_k$ corresponding to each candidate symbol $\hat{S}_k$. Mathematically the summation is as in expression (6):

$$r_k = \sum_{q=1}^{q=k-1} r_q + \sum_{q=k+1}^{q=M} r_q \qquad \text{Expression (6)}$$

A comparison module 71 in the error detection module 42 determines the maximum of the integer outputs $r_k$. When the maximum of $r_k$ is above a threshold, it is determined that there are errors in the estimated source signal symbols, and the control signal CTL is set to CTL=1, such that a further iteration is performed by the error correction module. The threshold can be set as a function of the signal to noise ratio of the signal received by the receiver, which an be obtained through Monte-Carlo simulations, but the threshold can be freely adjusted by the user in the interests of maximising either accuracy of signal detection, or maximising processing speed. The lower the threshold, the more iteration steps will be required in order to ensure that there are no errors in the estimation decisions output by the error correction module. Accuracy will be improved, but processing speed will reduce.

If a further iteration is required, an estimation of the source signal $\hat{\underline{S}}^{n+2}$ will be performed using a repeat of the operations performed by the estimation modules 63 and the error detection module 42, using $\hat{\underline{S}}^{n+1}$ as the input to the grouping module 62 rather than $\hat{\underline{S}}^n$. In Figure 6, the further iteration is represented by the outputs of the estimation modules 63 passing through a switch 65 to the grouping module 62, in which the switch 65 is controlled by the control signal from the error detection module 42, but it will be understood that this representation is simply by way of example.

If the maximum of $r_k$ is below the threshold, no further iterations are required and the control signal CTL is set to CTL=0. The switch shown in Figure 6 is controlled such that the output of the multiplexer 64 is the estimated signal $\hat{\underline{S}}$, which represents the signal which is detected by the receiver 30. The signal is then output to further signal processing modules 33 for application-dependent processing.

The operation of the error detection module 42 is described by way of example, and it will be appreciated that alternative ways of determining an error in an estimated symbol are possible. For example, the maximisation step may be omitted, so that all, or a portion of the values $r_k$ from each subspace statistics module 70 are included in the threshold-comparison calculation, rather than only the maximum. Alternatively, rather than performing a direct comparison between an integer value and a threshold value, the number of outputs from the subspace statistics modules 70 which exceed the threshold may be used as a measure of the error in the signal estimation. For example, if three subspace statistics module outputs are greater than a threshold, it may be determined that there is no need for further iteration, whereas if a fourth subspace statistics module output is determined to be greater than a threshold, it may be determined that there is an error which can be corrected by a further estimation step. In this situation, it may be deemed that three subspace statistics module outputs represents an unacceptable outcome, however, and at this point, retransmission of the signal may be requested by the receiver. In other words, the error detection module 42 is capable of making a judgement as to whether further iterations are justified, or whether retransmission of the signal is more efficient. Such a decision may be based on an examination of the rate of conversion of the value which is compared with the threshold, and comparing it with a predetermined convergence rate, which may be set based on the requirements of a user.

The threshold my be dynamically adjusted (for example, raised) based on the number of iterations performed, so that if a calculation is requiring a high number of iterations, the error requirements can be relaxed such that a final decision can be output more quickly.

Although binary and integer values are described above, it will be appreciated that this is not essential, and any form of quantification of an error, and summation of errors, can be used in conjunction with a particular threshold format.

Table 1 illustrates the number of iterations which are required to achieve signal estimation for a particular signal to noise ratio (SNR), denoted using the energy per bit to noise power spectral density ratio $E_b/N_o$ (dB), in dependence upon the size of the MIMO array which is used in conjunction with the receiver. The results are for a signal transmitted using quadrature phase shift keying (QPSK).

**Table 1:** Number of iterations with respect to different SNRs and MIMO size.

| $E_b/N_o$ (dB) | 64MIMO | 128MIMO | 256MIMO | 512MIMO | 1024MIMO |
|---|---|---|---|---|---|
| 9.00 | 13.443 | 21.638 | 18.726 | 18.81 | 22.55 |
| 13.00 | 7.121 | 9.993 | 4.511 | 6.602 | 6.5789 |
| 17.00 | 4.726 | 4.024 | 4.099 | 4.67 | 4.79 |

Table 1 illustrates that as the signal to noise ratio increases, the required number of iterations reduces, which reflects the improved signal estimation which takes place in the presence of reduced noise.

Table 1 also illustrates the scalability of the invention to different MIMO sizes. It can be seen that as the MIMO array is increased from 64 to 1024, for example, the number of iterations is similar for $E_b/N_o$ of 13dB and 17dB. For $E_b/N_o$ of 9dB, the performance is similar for a MIMO array of 1024 as for 128. This illustrates that the required number of iterations does not dominate the computational complexity of the invention. In other words, while computation complexity in terms of the required number of parallel processing units would increase with the size of the MIMO array, the overall number of iterations, does not increase in the same way, and so computation complexity is not expressed in terms of the number of iterations of the error correction module and the error detection module. The scalability of the present invention is thus demonstrated.

The specific figures illustrate a relatively complex interrelation between the noise levels and the size of the MIMO array and performance. Conventionally, it would be expected that as the size of the MIMO array increases, performance would decrease due to the number of symbols to be processed, and the increased potential for errors to be introduced. In the present invention, however, performance at 256 and 512 MIMO is superior to that at 128 MIMO for an $E_b/N_o$ of 9dB and 13dB, while performance at 128, 235 and 512 MIMO is superior to that at 64 MIMO for an $E_b/N_o$ of 17dB. The increase in performance is due to efficient use of signal interference in symbol estimation through iterative diversity combining. Interference is source of information as the embodiments of the present invention can take advantage of different signal paths for transmission associated, for example, with signals received via different antennas in a MIMO array. Therefore more interference leads to greater diversity gain and the degree of use of interference increases with the size of the array, increasing performance and supporting the scalability of the present invention. Table 2 illustrates the percentage use of interference utilization by the invention with different MIMO size and modulation schemes. Table 3 illustrates the comparison with conventional techniques.

**Table 2:** Percentage of interference utilization with different MIMO size and modulation schemes

| 4QAM | | | | 16QAM | | | |
|---|---|---|---|---|---|---|---|
| 64 MIMO | 128 MIMO | 256 MIMO | 512 MIMO | 128 MIMO | 256 MIMO | 512 MIMO | 1024 MIMO |
| 39.81% | 89.13% | 100% | 100% | 28.18% | 44.67% | 63.10% | 79.43% |

| 64QAM | | | |
|---|---|---|---|
| 128 MIMO | 256 MIMO | 512 MIMO | 1024 MIMO |
| 6.31% | 22.39% | 39.81% | 63.10% |

Table 3: Percentage of interference utilization with different MIMO size and 4QAM

| 4QAM | | | | | |
|---|---|---|---|---|---|
| 64 MIMO | | | 128 MIMO | | |
| Embodiment of present invention | Successive Interference Cancellation | Lattice reduction | Embodiment of present invention | Successive Interference Cancellation | Lattice reduction |
| 39.81% | 7.9% | 6.17% | 89.13% | 6.3% | 2.5% |

With the knowledge of carrier frequency offsets (CFOs), embodiments of the present invention can utilise CFO-induced carrier interferences to largely improve the MIMO detection performance. This is because the CFO-induced carrier interferences destroy orthogonality amongst frequencies and introduce more superimposed signal components at the receiver side. As set out above, the performance of embodiments of the present invention improves as the number of superimposed components increases. Other techniques such as successive interference cancellation (SIC), lattice reduction (LR) and LAS (Tabu) feature extremely high complexity in the presence of known CFOs, and do not work properly due to poor computational scalability.

Embodiments of the present invention significantly improve throughput (successful delivery of a message over a communications channel, i.e. successful receipt of a transmitted signal) and link reliability in comparison with conventional systems. The performance of embodiments of the present invention can be measured in terms of a bit error rate (BER), i.e. the fraction of received bits which contain an error. Bit errors represent an incorrectly determined component of a signal, such as a symbol - this occurs where the estimate is deemed by the error detection module to be sufficiently accurate to meet the design criteria of the system, but represents an incorrect detection of the corresponding component of the transmitted source signal.

Table 4 illustrates a simulation of the throughput which is possible in of embodiment of present invention, with respect to MIMO size, and QAM order, in a communication system of bandwidth 100 MHz. The BER is less than $10^{-3}$ in the examples below. The table shows that the present invention can easily support a data rate as high as 0.4-0.6 Tbps. Such data rates would allow mobile devices to download a High Definition (HD) movie within a fraction of second.

| | 64 MIMO | 128MIMO | | | |
|---|---|---|---|---|---|
| | 4 QAM | 4QAM | 16QAM | 64QAM | 256QAM |
| bps/Hz | 128 | 256 | 512 | 768 | 1024 |
| Rate | 13 Gbps | 26 Gbps | 51 Gbps | 77 Gbs | 0.1 Tbps |
| $Eb/No$ (dB) | 15 | 12 | 22 | 37 | n/a |

| 256 MIMO | | | |
|---|---|---|---|
| | 4QAM | 16QAM | 64QAM | 256QAM |
| bps/Hz | 512 | 1024 | 1536 | 2048 |
| Rate | 51 Gbps | 0.1 Tbps | 0.15Tbps | 0.2Tbps |
| $Eb/No$ (dB) | 11 | 19 | 31 | n/a |

| 512 MIMO | | | |
|---|---|---|---|
| | 4QAM | 16QAM | 64QAM | 256QAM |
| bps/Hz | 1024 | 2048 | 3072 | 4096 |
| Rate | 0.1 Tbps | 0.2Tbps | 0.31Tbps | 0.41Tbps |
| $Eb/No$ (dB) | 11 | 18 | 29 | 42 |

| 1024MIMO | | |
|---|---|---|
| | 16QAM | 64QAM | 256QAM |
| bps/Hz | 4096 | 6144 | 8192 |
| Rate | 0.41Tbps | 0.61Tbps | 0.82Tbps |
| $Eb/No$ (dB) | 17 | 27 | 39 |

**Table 4: Throughput of embodiment of present invention with respect to MIMO size and modulations over 100MHz with BER < $10^{-3}$.**

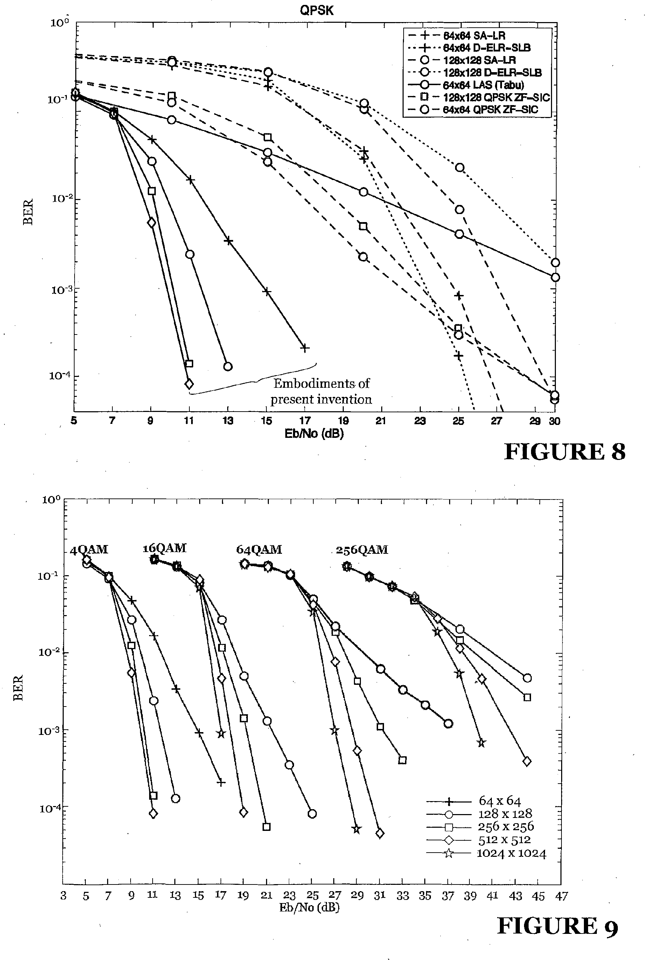

Figure 8 illustrates a comparison of the bit error rate of signal detection of the present invention and those of conventional systems, in the case of a QPSK transmission scheme. The present invention is illustrated via solid lines, with diamonds representing a 64x64 MIMO array, squares representing 128x128, circles representing 265x265 and crosses representing 512x512. The conventional schemes are: a Tabu likelihood ascent search (LAS), illustrated via a solid line with circular data points; 64x64 (crosses) and 128x128 (circles) QPSK using zero-forcing (ZF) and SIC (dotted lines); 64x64 (crosses) and 128x128 (circles) Lattice Reduction (LR) using Seysen's algorithm (SA) (dashed lines); 64x64 and 128x128 Element-based Lattice Reduction (ELR) techniques (dual-shortest longest basis "D-SLB").

It is illustrated that the present invention outperforms conventional systems. When comparing an embodiment of the present invention with a 512x512 MIMO array with conventional systems at a BER close to $10^{-4}$, the difference in SNR is more than 14 dB (11dB compared with 25dB). This comparison additionally illustrates that the present invention can support 512 parallel data streams whereas conventional systems can support only 64 data streams, corresponding to an eight-fold increase (512/64) in the supported data rate.

Figure 9 illustrates the performance comparison for different modulation schemes used in transmission, namely 4QAM, 16QAM, 64QAM and 256QAM, according to embodiments of the present invention. It is to be noted for the example of 16QAM, the performance of the present invention is much better than the state of the art with QPSK, by 8dB in SNR and by a factor of 32 in data rate.

Figure 9 also illustrates that the present invention can support a MIMO size as large as 1024 x 1024 and at the same time with a modulation order as high as 256QAM. More importantly, the present invention offers BER performance very close to the channel capacity limit of N-QAM sources. The channel capacity limit here refers to the minimum $Eb/No$ required to reliably transmit signals in the data rate as required. Thus as the MIMO size increases, the performance can be seen to approach the channel capacity limit at each modulation size.

The present invention can be combined with other schemes such as sphere decoding, lattice reduction and SIC in order to achieve the best performance-scalability tradeoff with respect to the size of the MIMO network. It is also possible to combine the present invention with any channel coding schemes such as turbo coding in order to further improve the BER performance.

The performance benefits of the present invention mean that the invention finds a number of beneficial applications. The present invention is able to handle thousands of superimposed components (waveforms) and high-order modulation schemes (e.g. 256QAM) with linear computational scalability. When the number of superimposed components increases, the detection performance approaches the channel capacity limit. Moreover, the disclosed technique is able to report existence of detection errors even when the information sources are uncoded. The present invention thus provides a practical solution to the problems of massive MIMO, networked MIMO, non-orthogonal waveforms, massive multiuser detection and interference utilisation.

It will be appreciated that modifications to the embodiments described above may be made above which fall within the scope of the invention as defined by the claims, based on interchange of some or all of the described or illustrated elements. Moreover, where certain elements of the present invention can be partially or fully implemented using known components, only those portions of such known components that are necessary for an understanding of the present invention are described, and detailed descriptions of other portions of such known components are omitted so as not to obscure the invention. In the present invention, an embodiment showing a singular component should not preclude other embodiments including a plurality of the same component, and vice-versa, unless explicitly stated otherwise herein. Further, the present invention encompasses present and future known equivalents to the known components referred to herein by way of illustration.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims. All structural and functional equivalents to the elements of the various embodiments described throughout this disclosure that are known or later come to be known to those of ordinary skill in the relevant art are intended to be encompassed by the claims.

## Claims

1. A receiver for detecting a signal, comprising:

   an input module (31) for receiving a signal transmitted over a communications channel, the received signal comprising a plurality, $M$, of observed signal components from a predetermined alphabet, and the input module arranged to receive information describing the transmission of the signal over the communications channel, represented by a channel matrix $\mathbf{H}$ represented by a singular value decomposition such that $\mathbf{H} = \mathbf{U}\Lambda\mathbf{V}^H$, for unitary matrices $\mathbf{U}$ and $\mathbf{V}$, and diagonal matrix $\Lambda$;
   an initialization module (40) for deriving first and second components of the received information describing the transmission of the signal, wherein the first derived information component is $\mathbf{U}\Lambda$ and the second derived information component is $\mathbf{V}^H$, and for formatting the received signal for estimation by equalising a portion of the effect of transmission on the signal using the first derived component to generate a formatted signal comprising a plurality of formatted signal components;
   an error correction module (41) for determining the plurality of estimated signal components from the predetermined alphabet which are closest to the formatted signal components in a space defined using the second derived information component; and
   an error detection module (42) for receiving an estimation decision from the error correction module and determining whether the estimation decision contains one or more errors, the error detection module arranged to control the error correction module to correct an estimation decision error if one or more errors are determined, and to output a detected signal containing the estimated plurality of signal components if no error is determined; wherein the space defined using the second derived information component has $M$ orthogonal dimensions, wherein the error correction module determines in parallel M estimated signal components by minimizing a sum of M linear distances in each of the M sub-spaces defined by the second derived information component between the estimated signal components and the formatted signal components for each of the M estimated signal components, assuming a fixed estimate for the other M-1 signal components.

2. A receiver according to claim 1, wherein the MIMO communications module is of a size which is at least 64 by 64.

**3.** A receiver according to claim 1 or claim 2 wherein the error correction module (41) comprises an estimation module (63) arranged to perform iterative correction of one or more errors determined by the error detection module (42), the error correction module further comprising:

a decision module (61) for making an initial estimate of signal components based on the formatted signal components, wherein the initial estimate is arranged as an input to the estimation module in a first iteration, wherein the estimation module determines the plurality of estimated signal components from the predetermined alphabet which are closest to the formatted signal components in a space defined using the second derived information component,

wherein the error correction module is further arranged to receive estimated signal components from the error detection module if an estimation decision is to be corrected, and to use the estimated signal components received from the error detection module as an input to the estimation module in a subsequent iteration.

**4.** A receiver according to claim 3 wherein the error correction module (41) further comprises a grouping module (62), wherein the grouping module is arranged to divide a signal input to the estimation module (63) into a plurality of groups, and the estimation module comprises a plurality of estimation modules, each estimation module arranged to estimate one of the plurality of components of the received signal,

wherein the error correction module further comprises a multiplexer (64) to accumulate the outputs from the plurality of estimation modules and output a multiplexed signal to the error detection module (42).

**5.** A receiver according to any one of the preceding claims wherein the error detection module (42) is arranged to determine whether the estimation decision contains one or more errors based on a comparison of a quantification of the distance between the estimated signal components and the formatted signal components with a threshold.

**6.** A receiver according to claim 5, wherein the threshold is configured based on the signal to noise ratio of the received signal.

**7.** A receiver according to claim 5 or claim 6, wherein the error detection module (42) comprises a plurality of subspace statistics modules (70), in which each subspace statistic module is arranged to compare the distance between an estimated signal component and a formatted signal component in a first space defined by the second derived information component, and a distance between an estimated signal component and a formatted signal component in a second space defined by the second derived information component, to determine whether the distance measured in the first space contains an error.

**8.** A receiver according to any one of the preceding claims, wherein the predetermined alphabet represents constellation points in a QAM transmission scheme.

**9.** A communications system comprising the receiver of any one of the preceding claims, and further comprising:

a plurality of access points (11) arranged to receive signals from a plurality of user equipment devices; and an interface (15) for collecting signals received at the plurality of access points and providing the collected signals to the receiver.

**10.** A communications system according to claim 9, which is a cloud-based radio access network, and the interface (15) is the fronthaul network.

**11.** A method of detecting a signal, comprising:

receiving a signal transmitted over a communications channel, the received signal comprising a plurality, $M$, of observed signal components from a predetermined alphabet, and receiving information describing the transmission of the signal over the communications channel represented by a channel matrix $\mathbf{H}$ represented by a singular value decomposition such that $\mathbf{H} = \mathbf{U}\Lambda\mathbf{V}^H$, for unitary matrices $\mathbf{U}$ and $\mathbf{V}$, and diagonal matrix $\Lambda$;
deriving first and second components of the received information describing the transmission of the signal wherein the first derived information component is $\mathbf{U}\Lambda$ and the second derived information component is $\mathbf{V}^H$;
formatting the received signal for estimation by equalising a portion of the effect of transmission on the signal using the first derived information component to generate a formatted signal comprising a plurality of formatted signal components;
determining the plurality of estimated signal components from the predetermined alphabet which are closest to the formatted signal components in a space defined using the second derived information component;

receiving an estimation decision and determining whether the estimation decision contains one or more errors;

correcting an estimation decision error if one or more errors are determined; and

outputting a detected signal containing the estimated plurality of signal components if no error is determined;

wherein the space defined using the second derived information component has $M$ orthogonal dimensions, wherein M estimated signal components are determined in parallel by minimizing a sum of M linear distances in each of the M sub-spaces defined by the second derived information component between the estimated signal components and the formatted signal components for each of the M estimated signal components, assuming a fixed estimate for the other M-1 signal components.

12. A method according to claim 11, comprising correcting an estimation decision error by iteratively modifying the estimated signal components.

13. A method according to claim 12, comprising initialising the iteration by determining estimated signal components which have the shortest Euclidean distance from the formatted signal components.

14. A computer program which, when the program is executed by a processor, causes the processor to carry out the method of any one of claims 11 to 13.

**Patentansprüche**

1. Empfänger zum Detektieren eines Signals, umfassend:

ein Eingabemodul (31) zum Empfangen eines Signals, das über einen Kommunikationskanal übertragen wird, wobei das empfangene Signal eine Vielzahl, **M**, von beobachteten Signalkomponenten von einem vorbestimmten Alphabet umfasst, und das Eingabemodul dazu ausgelegt ist, Informationen zu empfangen, welche die Übertragung des Signals über den Kommunikationskanal beschreiben, der durch eine Kanalmatrix **H** dargestellt ist, die durch eine Einzelwertzerlegung dargestellt ist, derart, dass **H** = **U**Λ**V**$^H$, für unitäre Matrizen **U** und **V** und eine diagonale Matrix Λ;

ein Initialisierungsmodul (40) zum Ableiten einer ersten und einer zweiten Komponente der empfangenen Informationen, welche die Übertragung des Signals beschrieben, wobei die erste abgeleitete Informationskomponente **U**Λ ist und die zweite abgeleitete Informationskomponente **V**$^H$ ist, und zum Formatieren des empfangenen Signals zur Schätzung durch Ausgleichen eines Teils des Übertragungseffekts auf das Signal unter Verwendung der ersten abgeleiteten Komponente, um ein formatiertes Signal zu erzeugen, das eine Vielzahl von formatierten Signalkomponenten umfasst;

ein Fehlerkorrekturmodul (41) zum Bestimmen der Vielzahl von geschätzten Signalkomponenten aus dem vorbestimmten Alphabet, die den formatierten Signalkomponenten in einem Raum am nächsten kommen, der unter Verwendung der zweiten abgeleiteten Informationskomponente definiert ist; und

ein Fehlerdetektionsmodul (42) zum Empfangen einer Schätzungsentscheidung von dem Fehlerkorrekturmodul und Bestimmen, ob die Schätzungsentscheidung einen oder mehrere Fehler enthält, wobei das Fehlerdetektionsmodul dazu ausgelegt ist, das Fehlerkorrekturmodul zu steuern, um eine Schätzungsentscheidung zu korrigieren, wenn ein der mehrere Fehler bestimmt sind, und ein detektiertes Signal auszugeben, das die geschätzte Vielzahl von Signalkomponenten enthält, wenn kein Fehler bestimmt ist;

wobei der Raum, der unter Verwendung der zweiten abgeleiteten Informationskomponente definiert ist, M orthogonale Dimensionen aufweist, wobei das Fehlerkorrekturmodul parallel M geschätzte Signalkomponenten bestimmt, indem eine Summe von M linearen Abständen in jedem der M Teilräume, die durch zweite abgeleitete Informationskomponente definiert sind, zwischen den geschätzten Signalkomponenten und den formatierten Signalkomponenten für jede der M geschätzten Signalkomponenten minimiert wird, wobei eine feste Schätzung für die anderen M-1 Signalkomponenten vorausgesetzt wird.

2. Empfänger nach Anspruch 1, wobei das MIMO-Kommunikationsmodul eine Größe aufweist, die mindestens 64 mal 64 beträgt.

3. Empfänger nach Anspruch 1 oder Anspruch 2, wobei das Fehlerkorrekturmodul (41) ein Schätzmodul (63) umfasst, das dazu ausgelegt ist, eine iterative Korrektur von einem oder mehreren Fehlern durchzuführen, die durch das Fehlerdetektionsmodul (42) bestimmt wurden, wobei das Fehlerkorrekturmodul ferner Folgendes umfasst:

ein Entscheidungsmodul (61) zum Erzeugen einer anfänglichen Schätzung von Signalkomponenten auf der Grundlage der formatierten Signalkomponenten, wobei die anfängliche Schätzung als eine Eingabe für das Schätzmodul in einer ersten Iteration ausgelegt ist, wobei das Schätzmodul die Vielzahl von geschätzten Signalkomponenten aus dem vorbestimmten Alphabet bestimmt, die den formatierten Signalkomponenten in einem Raum am nächsten kommen, der unter Verwendung der zweiten abgeleiteten Informationskomponente definiert ist, wobei das Fehlerkorrekturmodul ferner dazu ausgelegt ist, geschätzte Signalkomponenten von dem Fehlerdetektionsmodul zu empfangen, wenn eine Schätzungsentscheidung zu korrigieren ist, und die geschätzten Signalkomponenten, die von dem Fehlerdetektionsmodul empfangen werden, als eine Eingabe für das Schätzmodul in einer anschließenden Iteration zu verwenden.

4. Empfänger nach Anspruch 3, wobei das Fehlerkorrekturmodul (41) ferner ein Gruppierungsmodul (62) umfasst, wobei das Gruppierungsmodul dazu ausgelegt ist, ein Signal, das in das Schätzmodul (63) eingegeben wird, in eine Vielzahl von Gruppen zu teilen, und das Schätzmodul eine Vielzahl von Schätzmodulen umfasst, wobei jedes Schätzmodul dazu ausgelegt ist, eine der Vielzahl von Komponenten des empfangenen Signals zu schätzen, wobei das Fehlerkorrekturmodul ferner einen Multiplexer (64) zum Akkumulieren der Ausgaben von der Vielzahl von Schätzmodulen und Ausgeben eines gemultiplexten Signals an das Fehlerdetektionsmodul (42) umfasst.

5. Empfänger nach einem der vorhergehenden Ansprüche, wobei das Fehlerdetektionsmodul (42) dazu ausgelegt ist, zu bestimmen, ob die Schätzungsentscheidung einen oder mehrere Fehler enthält, auf der Grundlage eines Vergleichs einer Quantifizierung des Abstands zwischen den geschätzten Signalkomponenten und den formatierten Signalkomponenten mit einem Schwellenwert.

6. Empfänger nach Anspruch 5, wobei der Schwellenwert auf der Grundlage eines Signal-Rausch-Verhältnisses des empfangenen Signals konfiguriert ist.

7. Empfänger nach Anspruch 5 oder Anspruch 6, wobei das Fehlerdetektionsmodul (42) eine Vielzahl von Teilraum-Statistikmodulen (70) umfasst, wobei jedes Teilraum-Statistikmodul dazu ausgelegt ist, den Abstand zwischen einer geschätzten Signalkomponente und einer formatierten Signalkomponente in einem ersten Raum, der durch die zweite abgeleitete Informationskomponente definiert ist, und einen Abstand zwischen einer geschätzten Signalkomponente und einer formatierten Signalkomponente in einem zweiten Raum zu vergleichen, der durch die zweite abgeleitete Informationskomponente definiert ist, um zu bestimmen, ob der in dem ersten Raum gemessene Abstand einen Fehler enthält.

8. Empfänger nach einem der vorhergehenden Ansprüche, wobei das vorbestimmte Alphabet Konstellationspunkte in einem QAM-Übertragungsschema darstellt.

9. Kommunikationssystem, umfassend den Empfänger nach einem der vorhergehenden Ansprüche und ferner umfassend:

eine Vielzahl von Zugangspunkten (11), die dazu ausgelegt ist, Signale von einer Vielzahl von Benutzergerätvorrichtungen zu empfangen; und
eine Schnittstelle (15) zum Sammeln von Signalen, die bei der Vielzahl von Zugangspunkten empfangen werden, und Bereitstellen der gesammelten Signale für den Empfänger.

10. Kommunikationssystem nach Anspruch 9, bei welchem es sich um ein cloudbasiertes Funkzugangsnetzwerk handelt und wobei es sich bei der Schnittstelle (15) um das Fronthaul-Netzwerk handelt.

11. Verfahren zum Detektieren eines Signals, umfassend:

Empfangen eines Signals, das über einen Kommunikationskanal übertragen wird, wobei das empfangene Signal eine Vielzahl, M, von beobachteten Signalkomponenten aus einem vorbestimmten Alphabet umfasst, und Empfangen von Informationen, welche die Übertragung des Signals über den Kommunikationskanal beschreiben, der durch eine Kanalmatrix $\mathbf{H}$ dargestellt ist, die durch eine Einzelwertzerlegung dargestellt ist, derart, dass $\mathbf{H} = \mathbf{U}\Lambda\mathbf{V}^{\mathbf{H}}$, für unitäre Matrizen $\mathbf{U}$ und $\mathbf{V}$ und eine diagonale Matrix $\Lambda$;
Ableiten einer ersten und einer zweiten Komponente der empfangenen Informationen, welche die Übertragung des Signals beschreiben, wobei die erste abgeleitete Informationskomponente $\mathbf{U}\Lambda$ ist und die zweite abgeleitete Informationskomponente $\mathbf{V}^{\mathbf{H}}$ ist;
Formatieren des empfangenen Signals zur Schätzung durch Ausgleichen eines Teils des Übertragungseffekts auf das Signal unter Verwendung der ersten abgeleiteten Informationskomponente, um ein formatiertes Signal zu erzeugen, das eine Vielzahl von formatierten Signalkomponenten umfasst;

Bestimmen der Vielzahl von geschätzten Signalkomponenten aus dem vorbestimmten Alphabet, die den formatierten Signalkomponenten in einem Raum am nächsten kommen, der unter Verwendung der zweiten abgeleiteten Informationskomponente definiert ist;

Empfangen einer Schätzungsentscheidung und Bestimmen, ob die Schätzungsentscheidung einen oder mehrere Fehler enthält;

Korrigieren eines Schätzungsentscheidungsfehlers, wenn ein oder mehrere Fehler bestimmt werden; und

Ausgeben eines detektierten Signals, das die geschätzte Vielzahl von Signalkomponenten enthält, wenn kein Fehler bestimmt wird;

wobei der Raum, der unter Verwendung der zweiten abgeleiteten Informationskomponente definiert ist, M orthogonale Dimensionen aufweist, wobei M geschätzte Signalkomponenten parallel bestimmt werden, indem eine Summe von M linearen Abständen in jedem der M Teilräume, die durch zweite abgeleitete Informationskomponente definiert sind, zwischen den geschätzten Signalkomponenten und den formatierten Signalkomponenten für jede der M geschätzten Signalkomponenten minimiert wird, wobei eine feste Schätzung für die anderen M-1 Signalkomponenten vorausgesetzt wird.

12. Verfahren nach Anspruch 11, umfassend Korrigieren eines Schätzungsentscheidungsfehls durch iteratives Modifizieren der geschätzten Signalkomponenten.

13. Verfahren nach Anspruch 12, umfassend Initialisieren der Iteration durch Bestimmen der geschätzten Signalkomponenten, welche den kürzesten euklidischen Abstand von den formatierten Signalkomponenten aufweisen.

14. Computerprogramm, das bei Ausführung durch einen Prozessor den Prozessor dazu veranlasst, das Verfahren nach einem der Ansprüche 11 bis 13 auszuführen.

**Revendications**

1. Récepteur pour détecter un signal, comprenant :

un module d'entrée (31) pour recevoir un signal transmis dans un canal de communications, le signal reçu comprenant une pluralité, M, de composantes de signal observées à partir d'un alphabet prédéterminé, et le module d'entrée agencé pour recevoir des informations décrivant la transmission du signal dans le canal de communications, représentée par une matrice de canal $\mathbf{H}$ représentée par une décomposition en valeurs singulières de sorte que $\mathbf{H} = \mathbf{U}\Lambda\mathbf{V}^{\mathbf{H}}$, pour des matrices unités $\mathbf{U}$ et $\mathbf{V}$, et une matrice diagonale $\Lambda$ ;

un module d'initialisation (40) pour déduire des première et seconde composantes des informations reçues décrivant la transmission du signal, dans lequel la première composante d'informations déduite est $\mathbf{U}\Lambda$ et la seconde composante d'informations déduite est $\mathbf{V}^{\mathbf{H}}$, et pour formater le signal reçu aux fins d'estimation par égalisation d'une partie de l'effet de transmission sur le signal à l'aide de la première composante déduite pour générer un signal formaté comprenant une pluralité de composantes de signal formatées ;

un module de correction d'erreurs (41) pour déterminer la pluralité de composantes de signal estimées à partir de l'alphabet prédéterminé qui sont les plus proches des composantes de signal formatées dans un espace défini à l'aide de la seconde composante d'informations déduite ; et

un module de détection d'erreurs (42) pour recevoir une décision d'estimation depuis le module de correction d'erreurs et déterminer si la décision d'estimation contient une ou plusieurs erreurs, le module de détection d'erreurs agencé pour commander le module de correction d'erreurs pour corriger une erreur de décision d'estimation si une ou plusieurs erreurs sont déterminées, et pour délivrer en sortie un signal détecté contenant la pluralité estimée de composantes de signal si aucune erreur n'est déterminée ;

dans lequel l'espace défini à l'aide de la seconde composante d'informations déduite a M dimensions orthogonales, dans lequel le module de correction d'erreurs détermine en parallèle M composantes de signal estimées par minimisation d'une somme de M distances linéaires dans chacun des M sous-espaces définis par la seconde composante d'informations déduite entre les composantes de signal estimées et les composantes de signal formatées pour chacune des M composantes de signal estimées, en supposant une estimation fixe pour les autres M-1 composantes de signal.

2. Récepteur selon la revendication 1, dans lequel le module de communications MIMO a une taille qui est au moins de 64 par 64.

3. Récepteur selon la revendication 1 ou la revendication 2, dans lequel le module de correction d'erreurs (41) comprend un module d'estimation (63) agencé pour réaliser une correction itérative d'une ou de plusieurs erreurs déterminées par le module de détection d'erreurs (42), le module de correction d'erreurs comprenant en outre :

un module de décision (61) pour faire une estimation initiale de composantes de signal sur la base des composantes de signal formatées, dans lequel l'estimation initiale est agencée en tant qu'entrée pour le module d'estimation dans une première itération, dans lequel le module d'estimation détermine la pluralité de composantes de signal estimées à partir de l'alphabet prédéterminé qui sont les plus proches des composantes de signal formatées dans un espace défini à l'aide de la seconde composante d'informations déduite, dans lequel le module de correction d'erreurs est en outre agencé pour recevoir des composantes de signal estimées depuis le module de détection d'erreurs si une décision d'estimation doit être corrigée, et pour utiliser les composantes de signal estimées reçues depuis le module de détection d'erreurs en tant qu'entrée pour le module d'estimation dans une itération subséquente.

4. Récepteur selon la revendication 3, dans lequel le module de correction d'erreurs (41) comprend en outre un module de groupement (62), dans lequel le module de groupement est agencé pour diviser un signal entré dans le module d'estimation (63) en une pluralité de groupes, et le module d'estimation comprend une pluralité de modules d'estimation, chaque module d'estimation agencé pour estimer une de la pluralité de composantes du signal reçu, dans lequel le module de correction d'erreurs comprend en outre un multiplexeur (64) pour accumuler les sorties depuis la pluralité de modules d'estimation et délivrer en sortie un signal multiplexé vers le module de détection d'erreurs (42).

5. Récepteur selon l'une quelconque des revendications précédentes, dans lequel le module de détection d'erreurs (42) est agencé pour déterminer si la décision d'estimation contient une ou plusieurs erreurs sur la base d'une comparaison d'une quantification de la distance entre les composantes de signal estimées et les composantes de signal formatées à un seuil.

6. Récepteur selon la revendication 5, dans lequel le seuil est configuré sur la base du rapport signal sur bruit du signal reçu.

7. Récepteur selon la revendication 5 ou la revendication 6, dans lequel le module de détection d'erreurs (42) comprend une pluralité de modules de statistiques de sous-espaces (70), dans lesquels chaque module de statistiques de sous-espace est agencé pour comparer la distance entre une composante de signal estimée et une composante de signal formaté dans un premier espace défini par la seconde composante d'informations déduite, et une distance entre une composante de signal estimée et une composante de signal formatée dans un second espace défini par la seconde composante d'informations déduite, pour déterminer si la distance mesurée dans le premier espace contient une erreur.

8. Récepteur selon l'une quelconque des revendications précédentes, dans lequel l'alphabet prédéterminé représente des points de constellation dans un schéma de transmission QAM.

9. Système de communication comprenant le récepteur selon l'une quelconque des revendications précédentes et comprenant en outre :

une pluralité de points d'accès (11) agencés pour recevoir des signaux depuis une pluralité de dispositifs d'équipement d'utilisateur ; et
une interface (15) pour collecter des signaux reçus au niveau de la pluralité de points d'accès et fournir les signaux collectés au récepteur.

10. Système de communication selon la revendication 9, qui est un réseau d'accès radio à base infonuagique, et l'interface (15) est le réseau fronthaul.

11. Procédé de détection d'un signal, comprenant :

la réception d'un signal transmis dans un canal de communications, le signal reçu comprenant une pluralité, M, de composantes de signal observées à partir d'un alphabet prédéterminé, et la réception d'informations décrivant la transmission du signal dans le canal de communications représenté par une matrice de canal $\mathbf{H}$ représentée par une décomposition en valeurs singulières de sorte que $\mathbf{H} = \mathbf{U}\Lambda\mathbf{V}^H$, pour des matrices unités $\mathbf{U}$

et **V**, et une matrice diagonale $\Lambda$ ;

la déduction de première et seconde composantes des informations reçues décrivant la transmission du signal dans lequel la première composante d'informations déduite est $\mathbf{U}\Lambda$ et la seconde composante d'informations déduite est $\mathbf{V}^H$ ;

le formatage du signal reçu aux fins d'estimation par égalisation d'une partie de l'effet de transmission sur le signal à l'aide de la première composante d'informations déduite pour générer un signal formaté comprenant une pluralité de composantes de signal formatées ;

la détermination de la pluralité de composantes de signal estimées à partir de l'alphabet prédéterminé qui sont les plus proches des composantes de signal formatées dans un espace défini à l'aide de la seconde composante d'informations déduite ;

la réception d'une décision d'estimation et le fait de déterminer si la décision d'estimation contient une ou plusieurs erreurs ;

la correction d'une erreur de décision d'estimation si une ou plusieurs erreurs sont déterminées ; et

la sortie d'un signal détecté contenant la pluralité estimée de composantes de signal si aucune erreur n'est déterminée ;

dans lequel l'espace défini à l'aide de la seconde composante d'informations déduite a M dimensions orthogonales, dans lequel M composantes de signal estimées sont déterminées en parallèle par minimisation d'une somme de M distances linéaires dans chacun des M sous-espaces définis par la seconde composante d'informations déduite entre les composantes de signal estimées et les composantes de signal formatées pour chacune des M composantes de signal estimées, supposant une estimation fixe pour les autres M-1 composantes de signal.

12. Procédé selon la revendication 11, comprenant la correction d'une erreur de décision d'estimation par modification de manière itérative des composantes de signal estimées.

13. Procédé selon la revendication 12, comprenant l'initialisation de l'itération par détermination de composantes de signal estimées qui ont la plus courte distance euclidienne à partir des composantes de signal formatées.

14. Programme d'ordinateur qui, lorsque le programme est exécuté par un processeur, amène le processeur à effectuer le procédé selon l'une quelconque des revendications 11 à 13.

**FIGURE 1**

FIGURE 2

**FIGURE 3**

EP 3 186 936 B1

$X_1$
$X_2$
$\vdots$
$X_M$

LTM

**Initialization Module**

21   40   42

$V$

$(\tilde{X}_1, \tilde{X}_2, \ldots, \tilde{X}_M)$

**Error Detection Module**

$\hat{S}_1$
$\hat{S}_2$
$\vdots$
$\hat{S}_M$

$V$

$(\tilde{X}_1, \tilde{X}_2, \ldots, \tilde{X}_M)$

$\hat{S}_1^{(n)}, \hat{S}_2^{(n)}, \ldots, \hat{S}_M^{(n)}$

CTL

**Error Correction Module**

41

**FIGURE 4**

40

Initialization Module

$X_1$
$X_2$
⋮
$X_M$

Equalisation module

$$\underline{\tilde{\mathbf{X}}} = \mathbf{U}^H \mathbf{\Lambda}^{-1} \underline{\mathbf{X}}$$

$\tilde{X}_1, \tilde{X}_2, \ldots, \tilde{X}_M$

51

$\mathbf{U}^H \mathbf{\Lambda}^{-1}$

Subspace determination module

e.g. $LTM = \mathbf{U}\mathbf{\Lambda}\mathbf{V}^H$

LTM

$\mathbf{V}$

50

**FIGURE 5**

**FIGURE 6**

**FIGURE 7**

**FIGURE 8**

**FIGURE 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009078766 A

### Non-patent literature cited in the description

- **D. GESBERT et al.** Multi-cell MIMO cooperative networks: a new look at interference. *IEEE Journal of Selected Areas in Communications,* December 2010, vol. 28, 1380-1408

- **F. RUSEK et al.** Scaling up MIMO: opportunities and challenges with very large arrays. *IEEE Signal Processing Magazine,* January 2013, 40-60